# EUROPEAN PATENT SPECIFICATION

(11) **EP 4 339 514 B1**
(45) Date of publication and mention of the grant of the patent: **01.10.2025**
(21) Application number: 23191461.5
(22) Date of filing: 15.08.2023
(51) Int. Cl.: F23R 3/28

(54) **METHOD FOR MANUFACTURING A FUEL SPRAY NOZZLE FOR GAS TURBINE ENGINE**
VERFAHREN ZUR HERSTELLUNG EINER BRENNSTOFFSPRÜHDÜSE FÜR GASTURBINENTRIEBWERK
PROCÉDÉ DE FABRICATION D'UNE BUSE DE PULVÉRISATION DE CARBURANT POUR MOTEUR À TURBINE À GAZ

(30) Priority: 14.09.2022 GB 202213412
(43) Date of publication of application: 20.03.2024
(73) Proprietor: Rolls-Royce plc, London N1 9FX (GB)
(72) Inventor: Wilson, Robin, Derby, DE24 8BJ (GB); Stevenson, Guy, Derby, DE24 8BJ (GB); Choong, Yue Hao, Derby, DE24 8BJ (GB); Natalaray, Thaddie, Derby, DE24 8BJ (GB)
(74) Representative: Rolls-Royce plc

(56) References cited:
- US-A1- 2012 047 903
- US-A1- 2012 228 397
- US-A1- 2016 223 201
- US-A1- 2021 095 851
- US-A1- 2022 099 290

## Description

### Field of the disclosure

The present disclosure relates to a method for manufacturing a fuel spray nozzle.

### Background

A gas turbine engine generally includes a fuel spray nozzle for introducing fuel into a combustor of the gas turbine engine. Specifically, the fuel is injected in the form of an atomized and precisely patterned spray to facilitate even and complete combustion within the gas turbine engine in the shortest possible time.

Conventionally, fuel spray nozzles are fabricated in sections and joined together, for example, by a brazing process. However, brazing of the multiple sections may affect a performance of the fuel spray nozzle, for example, the performance of such fuel spray nozzles may not be optimal. Further, it may be challenging to perform the brazing process on different sections of the fuel spray nozzle. Moreover, conventional fuel spray nozzles may exhibit increased propensity to coking. In some examples, fuel may deposit on walls of internal channels of the fuel spray nozzle and may block/restrict a fuel flow into the combustor, thereby deteriorating the performance of the fuel spray nozzle.

US 2022/099290 A1 discloses an aircraft gas turbine engine fuel injector that is formed by additive layer manufacturing. The document does not disclose the use of subtractive manufacturing techniques to form metering features within the fuel injector.

US 2016/223201 A1 discloses a fuel injector for a gas turbine engine, having an additively-manufactured nozzle body. The document discloses an arrangement of internal passageways of a fuel circuit comprising a converging junction such that an effective metering flow area is established that is less than the minimum flow area defined within the fuel circuit. The document also discloses additional operations, like hydro-honing, that may optionally be used to establish a restricting flow in the injector.

US 2012/228397 A1 relates to systems and a method for cooling a staged air blast fuel injector. The document discloses the use of EDM to form slots and/or holes that are used to meter fuel flow though the injector.

### Summary

According to the invention, there is provided a method for manufacturing a fuel spray nozzle for a gas turbine engine as set out in claim 1.

The fuel spray nozzle manufactured by the method described herein may allow formation of complex passageways within the fuel spray nozzle, thereby optimising fuel flow through the fuel spray nozzle and improving cooling performance thereof. Further, the fabrication of the fuel spray nozzle in three sections using additive layer manufacturing may enable improved and easy access to the plurality of internal passageways and the metering features. Specifically, by manufacturing the fuel spray nozzle in three stages, complex internal structures of the fuel spray nozzle may be easily accessed for the purpose of finishing the internal passages.

Further, modifying the at least one metering feature of the second section by the first subtractive manufacturing process to obtain the desired flow distribution and/or the desired surface roughness may improve atomization and mixing of fuel during operation of the gas turbine engine. Furthermore, achieving the desired surface roughness in the second section may exhibit reduced coking and may improve performance of the fuel spray nozzle. Moreover, the first subtractive manufacturing process may allow the metering features to have precise dimensions and tolerances as per application requirements.

The metering feature may be a slot, for example a slotted hole. The spin chamber may be considered a preparation zone for uniform distribution of fuel from the filming lip.

In some embodiments, the method further includes, prior to forming the second section of the fuel spray nozzle, modifying the plurality of internal passageways of the first section by a second subtractive manufacturing process to obtain a desired diameter of each of the plurality of internal passageways and/or a desired surface roughness of each of the plurality of internal passageways. Advantageously, modifying the plurality of internal passageways to obtain the desired surface roughness may reduce coking in the plurality of internal passageways. In other words, the desired surface roughness as achieved by the second subtractive manufacturing process may reduce an amount of unburnt/burnt hydrocarbons in the fuel sticking to walls defined by the internal passageways. Consequently, the durability and performance of the fuel spray nozzle may be improved, and the fuel flow through the fuel spray nozzle may be optimized. Further, the second subtractive manufacturing process may allow the internal passageways to have precise dimensions and tolerances as per application requirements.

In some embodiments, the second subtractive manufacturing process includes at least one of an abrasive flow machining process, a hydro-cavitation abrasive finishing process, and a chemical etching process. It should be noted that any known subtractive manufacturing process may be used to modify the internal passageways of the first section. As used herein, the term "subtractive manufacturing process", unless otherwise specified, refers to any machining or material removal process known in the art.

While forming the first, second, and third sections by additive layer manufacturing, some powered dust particles or raw material may remain in the internal parts of the fuel spray nozzle, for example, the plurality of internal passageways of the first section and the metering features of the second section. Such particles may lead to early formation of coking during operation. A manufacturing of the fuel spray nozzle using the method described herein may remove such particles from the metering features and the plurality of internal passageways by the first and second subtractive manufacturing processes, respectively.

In some embodiments, the method further includes, prior to forming the second section of the fuel spray nozzle, modifying a first surface of the first section by a third subtractive manufacturing process. The second section is formed on the first surface of the first section. The third subtractive manufacturing process may present a surface (i.e., the modified first surface) having a desired surface finish on which the second section of the fuel spray nozzle may be formed.

In some embodiments, the third subtractive manufacturing process includes at least one of a milling process, a grinding process, and a burr removal process. It should be noted that any known subtractive manufacturing process may be used to modify the first surface of the first section.

In some embodiments, the method further includes, prior to forming the third section of the fuel spray nozzle, modifying a second surface of the second section by a fourth subtractive manufacturing process. The third section is formed on the second surface of the second section. The fourth subtractive manufacturing process may present a surface (i.e., the modified second surface) having a desired surface finish on which the third section of the fuel spray nozzle may be formed.

In some embodiments, the fourth subtractive manufacturing process includes at least one of a milling process, a grinding process, and a burr removal process. It should be noted that any known subtractive manufacturing process may be used to modify the second surface of the second section.

In some embodiments, the first subtractive manufacturing process includes at least one of a drilling process, a hydro-erosive grinding process, an electric discharge machining process, and a hydro-cavitation abrasive finishing process. It should be noted that any known subtractive manufacturing process may be used to modify the metering features of the second section.

### Brief description of the drawings

Embodiments will now be described by way of example only, with reference to the Figures, in which:
**Figure 1** is a sectional side view of a gas turbine engine;
**Figure 2** is a sectional side view of a combustor associated with the gas turbine engine of Figure 1;
**Figure 3** is a schematic perspective view of a fuel spray nozzle associated with the gas turbine engine of Figure 1;
**Figure 4** is a schematic perspective view of a first section of the fuel spray nozzle of Figure 3;
**Figure 5** is a schematic side view of a hydro-cavitation abrasive finishing set-up including a fixture and the first section of the fuel spray nozzle of Figures 3 and 4;
**Figure 6** is a schematic perspective view of a second section of the fuel spray nozzle of Figure 3;
**Figure 7** is a schematic perspective view of a hydro-erosive grinding set-up including a fixture and the first and second sections of the fuel spray nozzle of Figures 3 to 6;
**Figure 8** is a schematic perspective view of a third section of the fuel spray nozzle of Figures 3 to 6;
**Figure 9** is a sectional schematic view of a fuel spray nozzle according to a second embodiment; and
**Figure 10** is a flowchart of a method for manufacturing the fuel spray nozzle of Figures 3 to 8 and the fuel spray nozzle of Figure 9;

### Detailed description

Aspects and embodiments of the present disclosure will now be discussed with reference to the accompanying figures. Further aspects and embodiments will be apparent to those skilled in the art.

As used herein, a component extends "axially" relative to an axis if the component extends along the axis. A component extends "circumferentially" relative to an axis if the component extends in a circumferential direction defined around the axis. A component extends "radially" relative to an axis if the component extends radially inward or outward relative to the axis.

As used herein, "a radially inner surface" and "a radially outer surface" of a component may be defined as an innermost, circumferentially extending surface and an outermost, circumferentially extending surface of the component, respectively, relative to the axis of rotation.

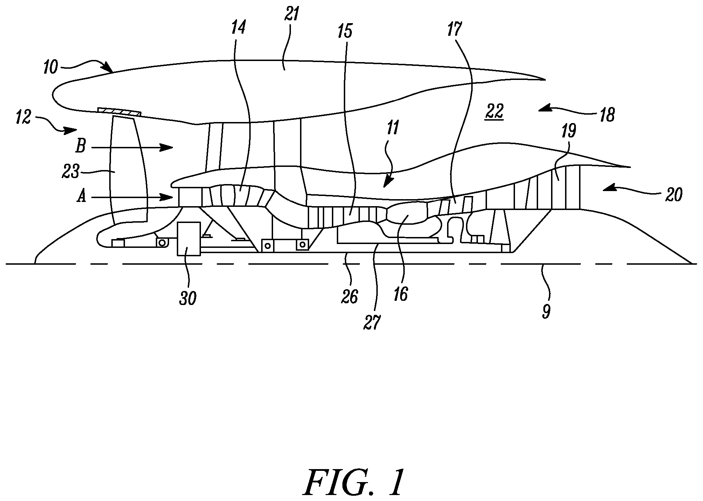

**Figure 1** illustrates a gas turbine engine 10 having a rotational axis 9. The engine 10 comprises an air intake 12 and a propulsive fan 23 that generates two airflows: a core airflow A and a bypass airflow B. The gas turbine engine 10 comprises a core 11 that receives the core airflow A. The engine core 11 comprises, in axial flow series, a low pressure compressor 14, a high pressure compressor 15, a combustion equipment 16, a high pressure turbine 17, a low pressure turbine 19, and a core exhaust nozzle 20. A nacelle 21 surrounds the gas turbine engine 10 and defines a bypass duct 22 and a bypass exhaust nozzle 18. The bypass airflow B flows through the bypass duct 22. The fan 23 is attached to and driven by the low pressure turbine 19 via a shaft 26 and an epicyclic gearbox 30.

In use, the core airflow A is accelerated and compressed by the low pressure compressor 14 and directed into the high pressure compressor 15 where further compression takes place. The compressed air exhausted from the high pressure compressor 15 is directed into the combustion equipment 16 where it is mixed with fuel and the mixture is combusted. The resultant hot combustion products then expand through, and thereby drive, the high pressure and low pressure turbines 17, 19 before being exhausted through the core exhaust nozzle 20 to provide some propulsive thrust. The high pressure turbine 17 drives the high pressure compressor 15 by a suitable interconnecting shaft 27. The fan 23 generally provides the majority of the propulsive thrust. The epicyclic gearbox 30 is a reduction gearbox.

The geometry of the gas turbine engine 10, and components thereof, is defined by a conventional axis system, comprising an axial direction (which is aligned with the rotational axis 9), a radial direction (in the bottom-to-top direction in Figure 1), and a circumferential direction (perpendicular to the page in the Figure 1 view). The axial, radial, and circumferential directions are mutually perpendicular.

The present invention is equally applicable to aero gas turbine engines, marine gas turbine engines, and land-based gas turbine engines.

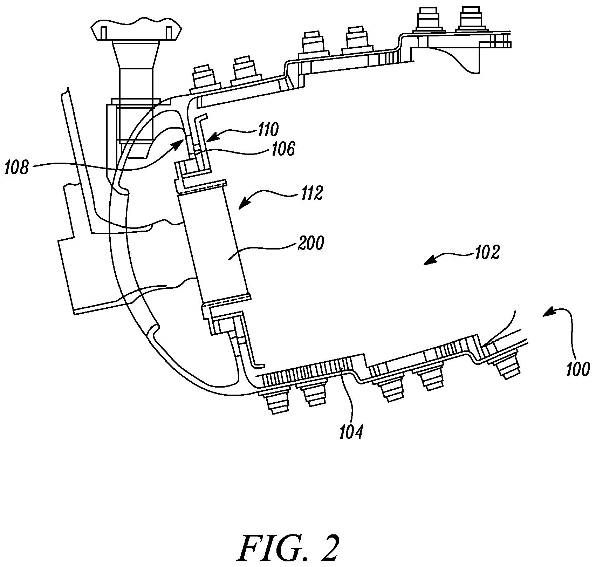

Referring to **Figure 2****,** the gas turbine engine 10 includes a combustor 100. Figure 2 illustrates an exemplary embodiment of the combustor 100 for the gas turbine engine 10 of Figure 1. The combustor 100 may define a combustion chamber 102. The combustion chamber 102 may be defined by a combustor wall 104 and an annular meter panel 106.

The meter panel 106 includes a cold side 108 and a hot side 110. The meter panel 106 is disposed proximal to the high pressure compressor 15 (see Figure 1). The meter panel 106 has an aperture 112 extending through the meter panel 106 between the hot and cold sides 108, 110. The upstream cold side 108 faces the high pressure compressor 15 and the downstream hot side 110 faces the combustion chamber 102. The combustor 100 further includes a fuel spray nozzle 200. Specifically, the combustor 100 may include multiple fuel spray nozzles 200 (similar to the fuel spray nozzle 200). An annular location ring (not shown) may be coupled at an inside of the aperture 112 in the meter panel 106 for locating the fuel spray nozzle (FSN) 200. It should be noted that the meter panel 106 may include a number of apertures 112, such that each aperture 112 may receive a corresponding location ring, and a corresponding FSN 200 therethrough.

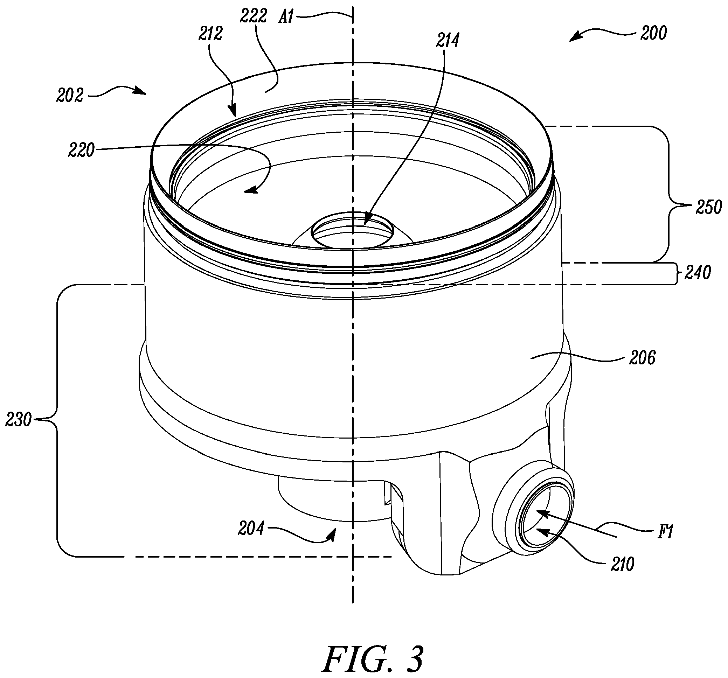

**Figure 3** illustrates a schematic perspective view of the FSN 200 for the gas turbine engine 10 (see Figure 1). In the illustrated embodiment of Figure 3, the FSN 200 is embodied as a pressure-swirl duplex fuel spray nozzle. The FSN 200 defines a central axis A1. The FSN 200 includes a first section 230, a second section 240, and a third section 250. Further, the FSN 200 is substantially manufactured using an additive layer manufacturing (ALM) process. The ALM process may include a three-dimensional printing process. In various examples, the ALM process may include a laser deposition process, a selective laser sintering process, a binder jet additive layer manufacturing process, a freeform fabrication process, stereolithography, and the like. It should be noted that the ALM process may include any technique of additive layer manufacturing known in the art.

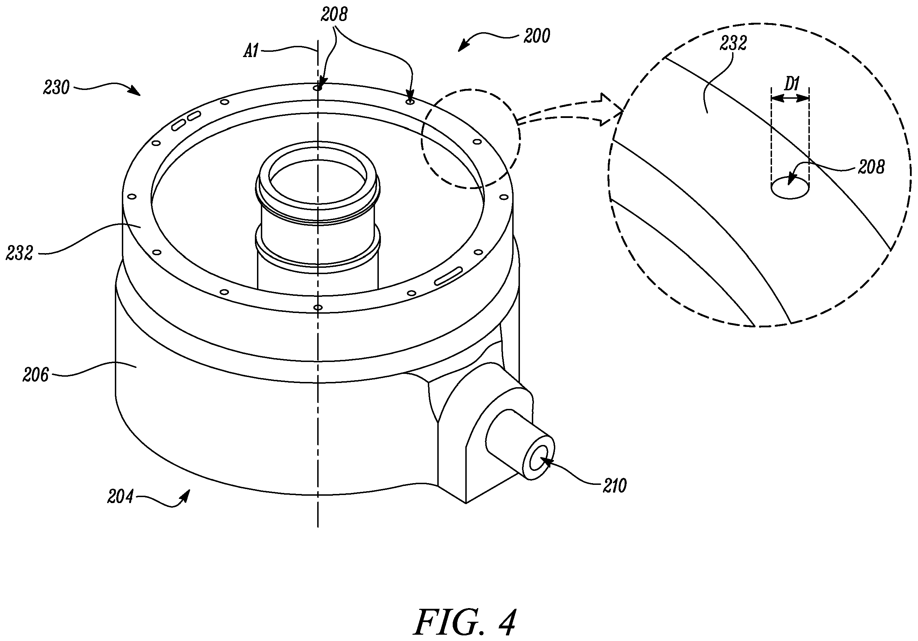

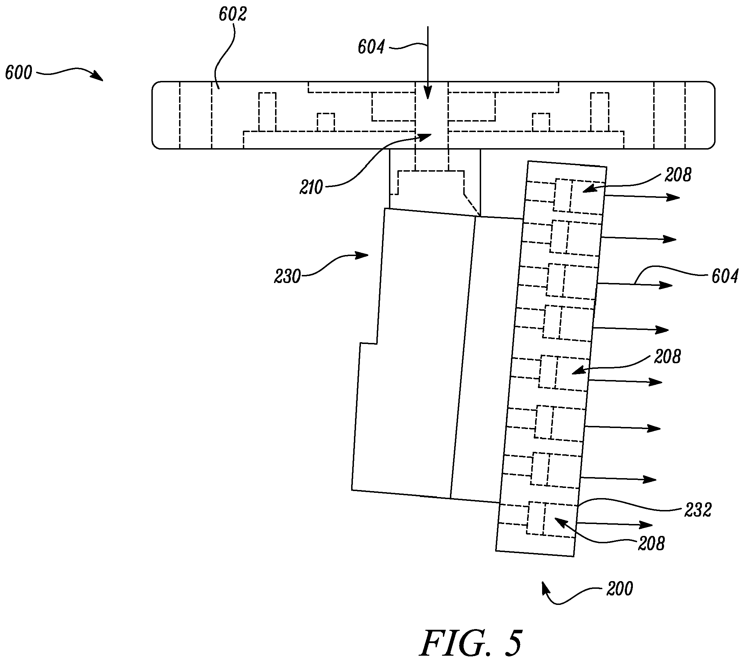

Further, the FSN 200 defines an upstream end 202 and a downstream end 204 opposite the upstream end 202. The upstream end 202 is defined proximal to the third section 250 and the downstream end 204 is defined proximal to the first section 230. Further, the first section 230 of the FSN 200 includes a main chamber 206. In the illustrated embodiment of Figure 4, the main chamber 206 includes a cylindrical shape. The main chamber 206 extends axially along the central axis A1, from the downstream end 204 towards the upstream end 202. Further, the first section 230 also includes a plurality of internal passageways 208 (shown in Figure 5). The term "plurality of internal passageways 208" may collectively refer to passages defined in the first section 230 that receive fuel from an inlet 210 and direct fuel towards the second section 240. The internal passageways 208 are circumferentially defined around the central axis A1. The first section 230 further includes a first surface 232 (show in Figure 4). The second section 240 is formed on the first surface 232.

The FSN 200 further includes at least one inlet 210 configured to receive a fuel flow F1. The at least one inlet 210 is disposed proximal to the downstream end 204 of the FSN 200. Further, the at least one inlet 210 is disposed in fluid communication with each of the plurality of internal passageways 208 of the first section 230. Specifically, the internal passageways 208 extend from the inlet 210 and terminate proximal to the first surface 232 of the first section 230. In the illustrated embodiment of Figure 3, the FSN 200 includes a single inlet 210. However, in other embodiments, the FSN 200 may include more than one inlet similar to the inlet 210.

Further, the FSN 200 includes outlets 212, 214 through which the fuel flow F1 exits the FSN 200. The outlets 212, 214 include a primary outlet 212 and a secondary outlet 214 disposed proximal to the upstream end 202 of the FSN 200. The outlet 212 may be interchangeably referred to as the primary outlet 212 and the outlet 214 may be interchangeably referred to as the secondary outlet 214. Further, the primary outlet 212 and the secondary outlet 214 are concentrically arranged about the central axis A1 of the FSN 200. Specifically, the secondary outlet 214 is concentrically disposed within the primary outlet 212.

Each of the plurality of internal passageways 208 extend from the inlet 210 towards the outlets 212, 214 (see Figure 3). Each of the plurality of internal passageways 208 may have a desired diameter D1 (shown in Figure 4). Further, in some embodiments, the plurality of internal passageways 208 forms a main flow circuit (not shown) and a pilot flow circuit (not shown). The fuel flow F1 entering the FSN 200 may be divided into two fuel streams, i.e., a main fuel flow and a pilot fuel flow. The main fuel flow is received within the main flow circuit and the pilot fuel flow is received within the pilot flow circuit. Further, the main fuel flow may exit the main flow circuit via the primary outlet 212 and the pilot fuel flow may exit the pilot flow circuit through the secondary outlet 214. In other embodiments, the plurality of internal passageways 208 may form a single flow circuit.

The pilot flow circuit may be used for spraying the fuel at a lower flow rate, and the main flow circuit may be used for spraying the fuel at a higher flow rate. Specifically, the pilot fuel flow may have a low flow rate, and the main fuel flow may have a high flow rate. A pressure valve (not shown) may be disposed proximal to the inlet 210 of the FSN 200. The pressure valve may separate fuel flows based on a pre-set fuel pressure.

**Figure 4** illustrates a perspective view of the first section 230 of the FSN 200. The first section 230 of the FSN 200 is formed by ALM. As illustrated, the first section 230 of the FSN 200 includes the main chamber 206 and the plurality of the internal passageways 208.

Further, in the illustrated embodiment of Figure 4, the first surface 232 of the first section 230 is modified by a third subtractive manufacturing process prior to forming the second section 240 of the FSN 200. Specifically, the first surface 232 of the first section 230 may be modified by the third subtractive manufacturing process to obtain a desired surface roughness of the first surface 232 of the first section 230. The third subtractive manufacturing process may present a surface having a desired surface finish on which the second section 240 of the FSN 200 may be formed. In some embodiments, the third subtractive manufacturing process includes at least one of a milling process, a grinding process, and a burr removal process. In other embodiments, the third subtractive manufacturing process may include any other surface finishing process, without any limitation.

In some embodiments, the first section 230 of the FSN 200 is modified by a second subtractive manufacturing process. Specifically, the plurality of internal passageways 208 of the first section 230 may be modified by the second subtractive manufacturing process to obtain the desired diameter D1 of each of the plurality of internal passageways 208 and/or a desired surface roughness of each of the plurality of internal passageways 208. Thus, the desired diameter D1 may correspond to a diameter that may be larger than an initial diameter of each internal passageway 208 prior to the modification made by the second subtractive manufacturing process. It should be noted that the second subtractive manufacturing process may also modify a diameter of the inlet 210 and/or a desired surface roughness at the inlet 210.

Advantageously, modifying the plurality of internal passageways 208 by the second subtractive manufacturing process to obtain the desired surface roughness may reduce coking in the internal passageways 208. In other words, the surface roughness of the plurality of internal passageways 208 may be reduced by the second subtractive manufacturing process so that an amount of unburnt/burnt hydrocarbons of the fuel sticking to walls defined by the internal passageways 208 may be reduced. Further, the second subtractive manufacturing process may allow the internal passageways 208 to have precise dimensions and tolerances as per application requirements. Obtaining the desired diameter D1 of the internal passageways 208 may improve atomization and mixing of the fuel within the internal passageways 208. In some cases, if the surface roughness and the initial diameter of the internal passageways 208 after forming the first section 230 is as per requirements, the step of modifying the internal passageways 208 by the second subtractive manufacturing process may be eliminated.

In some embodiments, the second subtractive manufacturing process includes at least one of an abrasive flow machining process, a hydro-cavitation abrasive finishing (HCAF) process, and a chemical etching process. In other embodiments, the second subtractive manufacturing process may include any other material removal process, without any imitation.

An exemplary HCAF set-up 600 for performing the second subtractive manufacturing process is illustrated in **Figure 5****.** Specifically, the HCAF set-up 600 is used to perform the HCAF process on the first section 230. It should be noted that the HCAF process as explained herein is merely for exemplary purposes. Any other subtractive manufacturing process may be used to modify the plurality of internal passageways 208 of the first section 230 in a similar manner.

The HCAF set-up 600 includes a fixture 602. In the illustrated embodiment of Figure 5, the fixture 602 supports and couples with the first section 230 of the FSN 200. Further, the inlet 210 of the FSN 200 is at least partially received within the fixture 602. A pressurized fluid flow 604 may be received into the inlet 210. A pressure of the fluid flow 604 may be controlled to generate cavitation bubbles (not shown) by the flow of fluid passing through surface irregularities (not shown) in the internal passageways 208. The cavitation bubbles may be continuously generated and imploded to erode a surface of the internal passageways 208. Further, the fluid flow 604 may include abrasive media to abrade the surface of the internal passageways 208. The erosion by the implosion of the cavitation bubbles and the abrasion by the abrasive media may occur simultaneously in the plurality of internal passageways 208 to obtain the desired diameter D1 (see Figure 4) of each of the plurality of internal passageways 208 and/or the desired surface roughness of each of the plurality of internal passageways 208. Consequently, the fluid flow 604 may exit the first section 230 through the internal passageways 208.

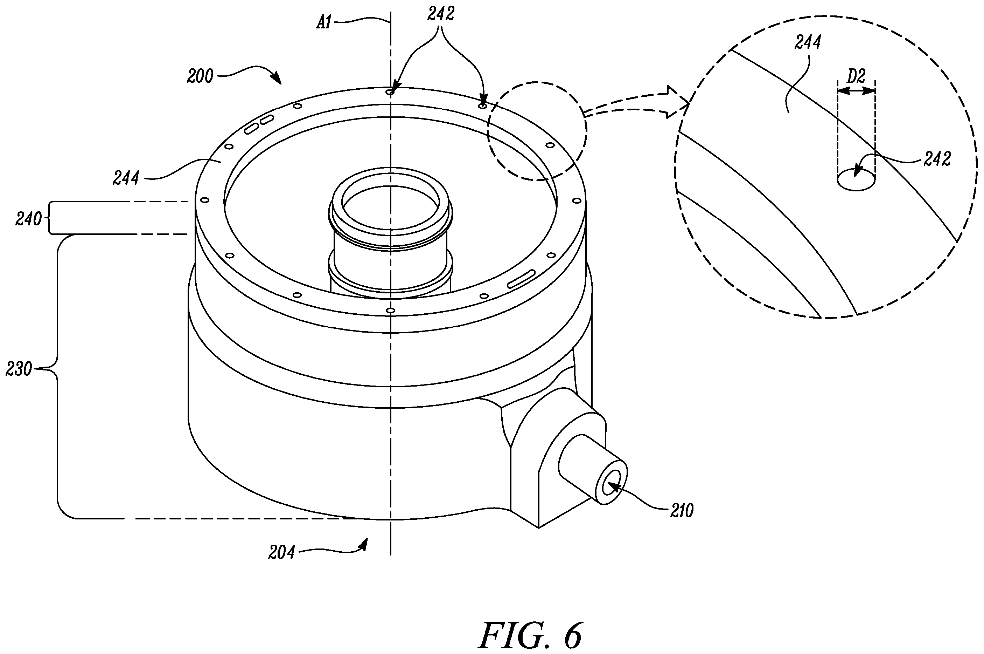

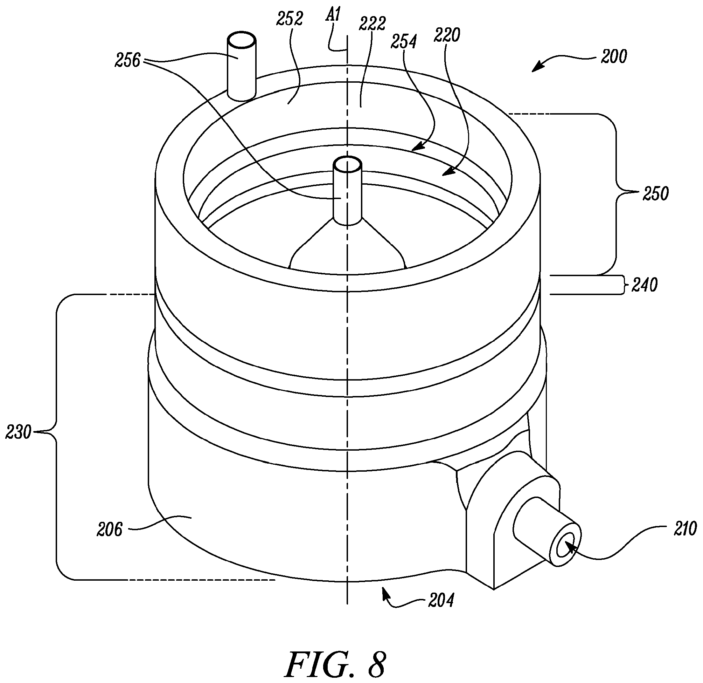

**Figure 6** illustrates a perspective view of the second section 240. The second section 240 of the FSN 200 is formed by ALM on the first section 230. The second section 240 includes at least one metering feature 242 disposed in fluid communication with at least one of the plurality of internal passageways 208 (shown in Figure 4) of the first section 230. The metering features 242 are circumferentially defined around the central axis A1. In the illustrated embodiment of Figure 5, the second section 240 includes multiple metering features 242, such that each metering feature 242 is in fluid communication with a corresponding internal passageway 208 of the first section 230. The second section 240 further includes a second surface 244 opposite the first surface 232 (see Figure 4). The third section 250 (shown in Figure 8) is formed on the second surface 244 of the second section 240. Each metering feature 242 may extend between the first surface 232 and the second surface 244. Each of the metering features 242 includes a desired diameter D2. In some embodiments, the desired diameter D2 of each metering feature 242 may be smaller than the desired diameter D1 of each internal passageway 208.

Further, in the illustrated embodiment of Figure 6, the second surface 244 of the second section 240 is modified by a fourth subtractive manufacturing process prior to forming the third section 250 of the FSN 200. Specifically, the second surface 244 of the second section 240 may be modified by the fourth subtractive manufacturing process to obtain a desired surface roughness of the second surface 244 of the second section 240. The fourth subtractive manufacturing process may present a surface having a desired surface finish on which the third section 250 of the FSN 200 may be formed. In some embodiments, the fourth subtractive manufacturing process includes at least one of a milling process and a grinding process. In other embodiments, the fourth subtractive manufacturing process may include any other surface finishing process, without any limitation.

In some embodiments, the at least one metering feature 242 of the second section 240 is modified by a first subtractive manufacturing process to obtain the desired diameter D2 of the at least one metering feature 242 and/or a desired surface roughness of the at least one metering feature 242. The first subtractive manufacturing process is performed before formation of the third section 250. Thus, the desired diameter D3 may correspond to a diameter that may be larger than an initial diameter of each metering feature 242 prior to the modification made by the first subtractive manufacturing process.

Advantageously, modifying the metering features 242 by the first subtractive manufacturing process to obtain the desired surface roughness may reduce coking in the metering features 242. In other words, the surface roughness of the metering features 242 may be reduced by the first subtractive manufacturing process so that an amount of unburnt/burnt hydrocarbons of the fuel sticking to walls defined by the metering features 242 may be reduced. Further, the first subtractive manufacturing process may allow the metering features 242 to have precise dimensions and tolerances as per application requirements. Moreover, obtaining the desired diameter D2 of the metering features 242 may improve atomization and mixing of the fuel within the metering features 242.

In some embodiments, the first subtractive manufacturing process includes at least one of a drilling process, a hydro-erosive grinding (HEG) process, an electric discharge machining process, and the HCAF process. However, in other embodiments, the first subtractive manufacturing process may include any material removal process, without any imitation. In an example, the HCAF set-up 600 as explained in relation to Figure 5 may be used to modify the metering features 242.

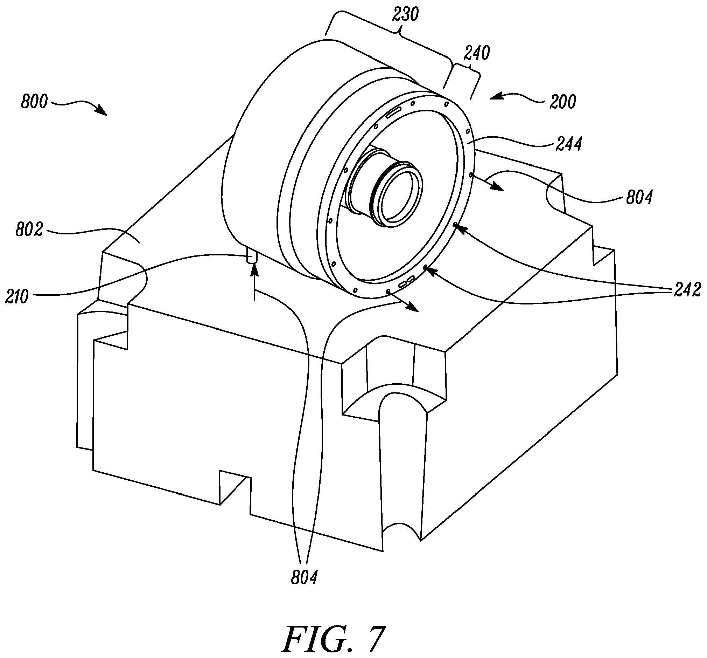

An exemplary HEG set-up 800 for performing the first subtractive manufacturing process is illustrated in Figure 7. Specifically, the HEG set-up 800 is used to perform the HEG process on the second section 240. It should be noted that the HEG process as explained herein is merely for exemplary purposes. Any other subtractive manufacturing process may be used to modify the metering features 242 of the second section 240 in a similar manner.

**Figure 7** illustrates a perspective view of the HEG set-up 800. The HEG set-up 800 includes a fixture 802. In the illustrated embodiment of Figure 7, the fixture 802 supports the first and second sections 230, 240 of the FSN 200. Further, an abrasive fluid (not shown) may be received within the inlet 210. Specifically, a fluid flow 804 of the abrasive fluid may first flow through the internal passageways 208 (shown in Figure 4) before being received in the metering features 242. Thus, the fluid flow 804 may flow through the internal passageways 208 as well as the metering features 242.

While flowing through the second section 240, the fluid flow 804 may abrade the metering features 242 in the second surface 244. Specifically, the fluid flow 804 may modify the metering features 242 to obtain the desired diameter D2 of the metering features 242 and/or the desired surface roughness of the metering features 242. It should be noted that the fluid flow 804 may also modify the desired diameter D1 and the desired surface roughness of the internal passageways 208. In such examples, it may be contemplated that the desired diameter D1 of the internal passageways 208 after the first subtractive manufacturing process may be greater than the desired diameter D2 after the second subtractive manufacturing process. The fluid flow 804 may exit the second section 240 through the flow outlet 806. Alternatively, the first and second sections 230, 240 may be positioned on the fixture 802 such that the fluid flow 804 may first flow through the metering features 242 before being received in the internal passageways 208. In such examples, the fluid flow 804 may exit through the FSN 200 through the metering features 242.

**Figure 8** illustrates a perspective view of the third section 250. The third section 250 of the FSN 200 is formed by ALM on the second section 240 to form the FSN 200. The third section 250 includes a deflector 220 and a spin chamber 222. The third section 250 includes the primary and secondary outlets 212, 214 (see Figure 3). The deflector 220 may include feeding ports (not shown) that deliver the main fuel flow from the inlet 210 to the spin chamber 222. The feeding ports may provide a high angular velocity to the main fuel flow. Consequently, the fuel in the main fuel flow may spin in the spin chamber 222 after achieving a high angular velocity. The spinning of the fuel may create an internal swirling flow with high centrifugal force that may cause formation of an air-cored vortex in the spin chamber 222. As a result, the fuel of the main fuel flow may form a hollow conical spray (not shown) while exiting the spin chamber 222 from the primary outlet 212. In some embodiments, the fuel may travel from a nozzle orifice (not shown) to form the hollow conical spray.

In some embodiments, the FSN 200 may further include another spin chamber (not shown) that may be similar to the spin chamber 222. The spin chamber may be disposed proximal to the secondary outlet 214. The spin chamber may spin the fuel in the pilot fuel flow to form the hollow conical spray while exiting the spin chamber from the secondary outlet 214. The third section 250 may include a radially inner surface 252. The radially inner surface 252 includes a groove 254 that extends circumferentially about the central axis A1. The groove 254 may separate the deflector 220 and the spin chamber 222 of the FSN 200. In the illustrated embodiment of Figure 8, the third section 250 further includes one or more expendable parts 256 that may be removed by a machining process after fabrication of the third section 250. The parts 256 may be removed by any conventional material removal process, such as, a milling process, a grinding process or a burr removal process.

The fabrication of fuel spray nozzles using the ALM process in a conventional manner may not enable access to the plurality of internal passageways 208 and the metering features 242 for performing one or more post-production processes. The FSN 200 described in the present disclosure may be manufactured in stages, at different instances of time. Specifically, in a first stage, the first section 230 may be formed by an additive manufacturing set-up (not shown). The first section 230 may then be removed from the additive manufacturing set-up for performing the second and third subtractive manufacturing processes on the first section 230. Further, in a second stage, the first section 230 may be positioned within the additive manufacturing set-up to form the second section 240. Furthermore, the first and second sections 230, 240 may be removed from the additive manufacturing set-up for performing the first and fourth subtractive manufacturing processes.

Moreover, in a third stage, the first and second sections 230, 240 may be again positioned within the additive manufacturing set-up to form the third section 250. By dividing the FSN 200 into the three sections, complex internal structures of the FSN 200, such as the internal passageways 208 and the metering features 242, may be easily fabricated and machined to achieve desired dimensions and/or surface roughness of the first and second sections 230, 240. Moreover, the FSN 200 as described herein may allow formation of complex passageways for fluid flow through the FSN 200 thereby optimising fuel flow through the FSN 200 and improving cooling performance of the FSN 200.

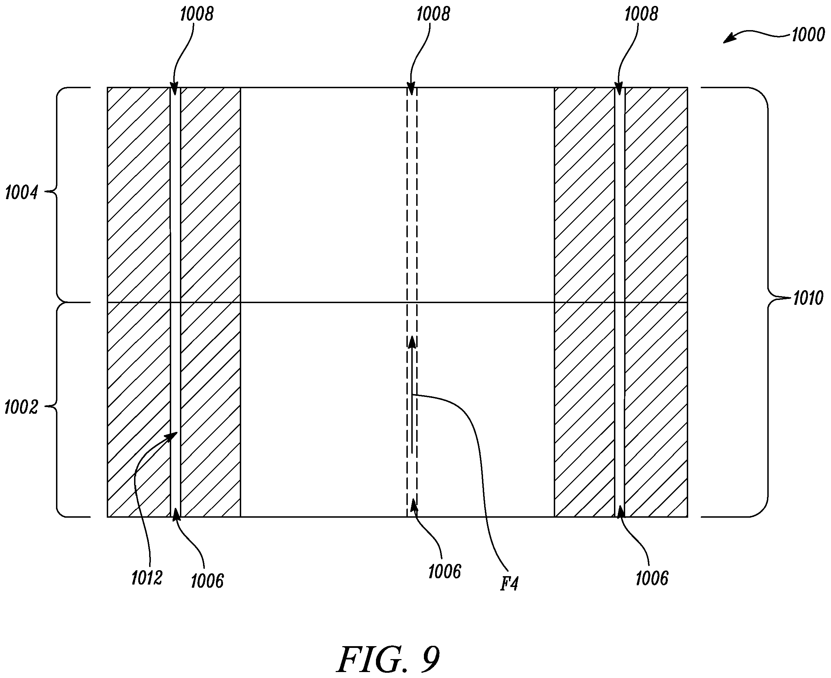

**Figure 9** illustrates a sectional schematic view of a FSN 1000, according to another embodiment of the present disclosure. The FSN 1000 may embody a simplex fuel spray nozzle, wherein only a single fuel flow circuit is defined in the FSN 1000. Thus, the FSN 1000 may eject a single spray of fuel, unlike the pressure-swirl duplex nozzle as explained in relation to Figures 2 to 8 that includes two fuel flow circuits, i.e., the main and pilot flow circuits. Further, only a portion of the FSN 1000 is illustrated in Figure 9. It should be noted that the FSN 1000 illustrated in Figure 9 is for explanatory purpose only, and the FSN 1000 may have any shape and/or design as per application requirements. The FSN 1000 may be substantially similar to the FSN 200 (see Figures 2 to 8) in terms of functionality. It should be noted that manufacturing details for the FSN 200 as explained in Figures 2 to 8 are equally applicable to the FSN 1000.

The FSN 1000 includes a first section 1002, a second section 1004, and a third section (not shown) that may be substantially similar to the first, second, and third sections 230, 240, 250, respectively, of the FSN 200. The first section 1002 includes a plurality of internal passageways 1006. Further, each passageway 1006 may be in fluid communication with a corresponding metering feature 1008 of the second section 1004 to form a flow passage 1010 for fuel to flow therethrough. In the illustrated embodiment of Figure 9, the plurality of internal passageways 1006 of the first section 1002 forms a single flow circuit 1012. The single flow circuit 1012 may allow passage of a single fuel flow F4 through the FSN 1000. The single fuel flow F4 may be received within the FSN 1000 via an inlet (not shown) of the FSN 1000. Further, the fuel may flow through the internal passageways 1006 and the metering features 1008 before exiting the FSN 1000 via an outlet (not shown) of the FSN 1000.

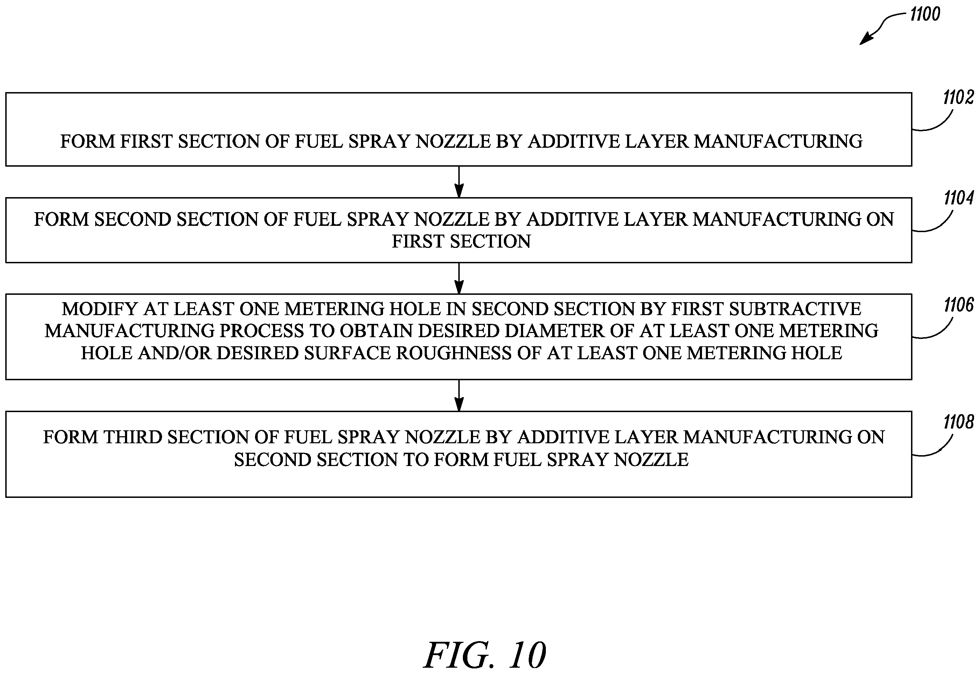

**Figure 10** illustrates a flowchart for a method 1100 for manufacturing the FSN 200 for the gas turbine engine 10. For exemplary purposes, the method 1100 will be explained in reference to the FSN 200 explained in relation to Figures 2 to 8. However, the method 1100 is equally applicable for manufacturing the FSN 1000 as shown in Figure 9.

At step 1102, the method 1100 includes forming the first section 230 of the FSN 200 by ALM. The first section 230 of the FSN 200 includes the main chamber 206 and the plurality of internal passageways 208. At step 1104, the method 1100 includes forming the second section 240 of the FSN 200 by ALM on the first section 230. The second section 240 includes at least one metering feature 242 disposed in fluid communication with at least one of the plurality of internal passageways 208 of the first section 230.

At step 1106, the method 1100 includes modifying the at least one metering feature 242 of the second section 240 by the first subtractive manufacturing process to obtain the desired diameter D2 of the at least one metering feature 242 and/or the desired surface roughness of the at least one metering feature 242. The first subtractive manufacturing process includes at least one of a drilling process, a HEG process, an electric discharge machining process, and a HCAF process. Advantageously, modifying the surface roughness of the metering features 242 may improve performance of the FSN 200 and reduce coking. Further, the first subtractive manufacturing process may allow the metering features 242 to have precise dimensions and tolerances as per application requirements.

At step 1108, the method 1100 includes forming the third section 250 of the FSN 200 by ALM on the second section 240 to form the FSN 200. The third section 250 includes the deflector 220 and the spin chamber 222. The FSN 200 manufactured by the method 1100 may exhibit reduced coking and may also improve performance of the FSN 200. Further, the FSN 200 manufactured by the method 1100 may allow formation of complex passageways in the FSN 200 for fluid flow, thereby optimising fuel flow through the FSN 200 and improving cooling performance of the FSN 200.

In some embodiments, the method 1100 further includes, prior to forming the second section 240 of the FSN 200, modifying the plurality of internal passageways 208 of the first section 230 by the second subtractive manufacturing process to obtain the desired diameter D1 of each of the plurality of internal passageways 208 and/or the desired surface roughness of each of the plurality of internal passageways 208. In some embodiments, the second subtractive manufacturing process includes at least one of an abrasive flow machining process, a HCAF process, and a chemical etching process. Advantageously, modifying the surface roughness of each of the plurality of internal passageways 208 of the first section 230 may improve performance of the FSN 200 and reduce coking. Further, the second subtractive manufacturing process may allow the internal passageways 208 to have precise dimensions and tolerances as per application requirements.

In some embodiments, the method 1100 further includes, prior to forming the second section 240 of the FSN 200, modifying the first surface 232 of the first section 230 by the third subtractive manufacturing process. The second section 240 is formed on the first surface 232 of the first section 230. In some embodiments, the third subtractive manufacturing process includes at least one of a milling process, a grinding process, and a burr removal process. In some embodiments, the method 1100 further includes, prior to forming the third section 250 of the FSN 200, modifying the second surface 244 of the second section 240 by the fourth subtractive manufacturing process. In some embodiments, the fourth subtractive manufacturing process includes at least one of a milling process and a grinding process.

## Claims

1. A method (1100) for manufacturing a fuel spray nozzle (200, 1000) for a gas turbine engine (10), the method (1100) comprising the steps of:
forming a first section (230, 1002) of the fuel spray nozzle (200, 1000) by additive layer manufacturing, the first section (230, 1002) of the fuel spray nozzle (200, 1000) comprising a main chamber (206) and a plurality of internal passageways (208, 10006);
forming a second section (240, 1004) of the fuel spray nozzle (200, 1000) by additive layer manufacturing on the first section (230, 1002), the second section (240, 1004) comprising at least one metering feature (242, 1008) disposed in fluid communication with at least one of the plurality of internal passageways (208, 1006) of the first section (230, 1002);
modifying the at least one metering feature (242, 1008) of the second section (240, 1004) by a first subtractive manufacturing process to obtain a desired diameter (D2) of the at least one metering feature (242, 1008) and/or a desired surface roughness of the at least one metering feature (242, 1008); and
forming a third section (250) of the fuel spray nozzle (200, 1000) by additive layer manufacturing on the second section (240, 1004) to form the fuel spray nozzle (200, 1000), the third section (250) comprising a deflector (220) and a spin chamber (222).

2. The method of claim 1, further comprising, prior to forming the second section (240) of the fuel spray nozzle (200), modifying the plurality of internal passageways (208) of the first section (240) by a second subtractive manufacturing process to obtain a desired diameter (D1) of each of the plurality of internal passageways (208) and/or a desired surface roughness of each of the plurality of internal passageways (208).

3. The method of claim 2, wherein the second subtractive manufacturing process comprises at least one of an abrasive flow machining process, a hydro-cavitation abrasive finishing process, and a chemical etching process.

4. The method of any preceding claim, further comprising, prior to forming the second section (240) of the fuel spray nozzle (200), modifying a first surface (232) of the first section (230) by a third subtractive manufacturing process, whereof the second section (240) is formed on the first surface (232) of the first section (230).

5. The method of claim 4, wherein the third subtractive manufacturing process comprises at least one of a milling process, a grinding process, and a burr removal process.

6. The method of any preceding claim, further comprising, prior to forming the third section (250) of the fuel spray nozzle (200), modifying a second surface (244) of the second section (240) by a fourth subtractive manufacturing process, wherein the third section is formed on the second surface of the second section (240).

7. The method of claim 6, wherein the fourth subtractive manufacturing process comprises at least one of a milling process, a grinding process, and a burr removal process.

8. The method of any preceding claim, wherein the first subtractive manufacturing process comprises at least one of a drilling process, a hydro-erosive grinding process, an electric discharge machining process, and a hydro-cavitation abrasive finishing process.

## Patentansprüche

1. Verfahren (1100) zur Herstellung einer Brennstoffsprühdüse (200, 1000) für ein Gasturbinentriebwerk (10), wobei das Verfahren (1100) die folgenden Schritte umfasst:
Bilden eines ersten Abschnitts (230, 1002) der Brennstoffsprühdüse (200, 1000) durch Additivschichtherstellung, wobei der erste Abschnitt (230, 1002) der Brennstoffsprühdüse (200, 1000) eine Hauptkammer (206) und eine Vielzahl von internen Durchgängen (208, 10006) umfasst;
Bilden eines zweiten Abschnitts (240, 1004) der Brennstoffsprühdüse (200, 1000) durch Additivschichtherstellung auf dem ersten Abschnitt (230, 1002), wobei der zweite Abschnitt (240, 1004) mindestens ein Dosierungsmerkmal (242, 1008) umfasst, das in Fluidkommunikation mit mindestens einem der Vielzahl von internen Durchgängen (208, 1006) des ersten Abschnitts (230, 1002) angeordnet ist;
Modifizieren des mindestens einen Dosierungsmerkmals (242, 1008) des zweiten Abschnitts (240, 1004) durch einen ersten subtraktiven Herstellungsvorgang, um einen gewünschten Durchmesser (D2) des mindestens einen Dosierungsmerkmals (242, 1008) und/oder eine gewünschte Oberflächenrauheit des mindestens einen Dosierungsmerkmals (242, 1008) zu erhalten; und
Bilden eines dritten Abschnitts (250) der Brennstoffsprühdüse (200, 1000) durch Additivschichtherstellung auf dem zweiten Abschnitt (240, 1004), um die Brennstoffsprühdüse (200, 1000) zu bilden, wobei der dritte Abschnitt (250) einen Deflektor (220) und eine Wirbelkammer (222) umfasst.

2. Verfahren nach Anspruch 1, ferner umfassend, vor dem Bilden des zweiten Abschnitts (240) der Brennstoffsprühdüse (200), das Modifizieren der Vielzahl von internen Durchgängen (208) des ersten Abschnitts (240) durch einen zweiten subtraktiven Herstellungsvorgang, um einen gewünschten Durchmesser (D1) jedes der Vielzahl von internen Durchgängen (208) und/oder eine gewünschte Oberflächenrauheit jedes der Vielzahl von internen Durchgängen (208) zu erhalten.

3. Verfahren nach Anspruch 2, wobei der zweite subtraktive Herstellungsvorgang mindestens eines von einem abrasiven Fließbearbeitungsvorgang, einem abrasiven Hydrokavitations-Fertigbearbeitungsvorgang und einem chemischen Ätzvorgang umfasst.

4. Verfahren nach einem vorhergehenden Anspruch, ferner umfassend, vor dem Bilden des zweiten Abschnitts (240) der Brennstoffsprühdüse (200), das Modifizieren einer ersten Oberfläche (232) des ersten Abschnitts (230) durch einen dritten subtraktiven Herstellungsvorgang, wovon der zweite Abschnitt (240) auf der ersten Oberfläche (232) des ersten Abschnitts (230) gebildet wird.

5. Verfahren nach Anspruch 4, wobei der dritte subtraktive Herstellungsvorgang mindestens eines von einem Fräsvorgang, einem Schleifvorgang und einem Entgratungsvorgang umfasst.

6. Verfahren nach einem vorhergehenden Anspruch, ferner umfassend, vor dem Bilden des dritten Abschnitts (250) der Brennstoffsprühdüse (200), das Modifizieren einer zweiten Oberfläche (244) des zweiten Abschnitts (240) durch einen vierten subtraktiven Herstellungsvorgang, wobei der dritte Abschnitt auf der zweiten Oberfläche des zweiten Abschnitts (240) gebildet wird.

7. Verfahren nach Anspruch 6, wobei der vierte subtraktive Herstellungsvorgang mindestens eines von einem Fräsvorgang, einem Schleifvorgang und einem Entgratungsvorgang umfasst.

8. Verfahren nach einem vorhergehenden Anspruch, wobei der erste subtraktive Herstellungsvorgang mindestens eines von einem Bohrvorgang, einem hydroerosiven Schleifvorgang, einem Funkenerosionsbearbeitungsvorgang und einem abrasiven Hydrokavitations-Fertigbearbeitungsvorgang umfasst.

## Revendications

1. Procédé (1100) permettant la fabrication d'une buse de pulvérisation de carburant (200, 1000) pour un moteur à turbine à gaz (10), le procédé (1100) comprenant les étapes consistant à :
la formation d'une première section (230, 1002) de la buse de pulvérisation de carburant (200, 1000) par fabrication par couche additive, la première section (230, 1002) de la buse de pulvérisation de carburant (200, 1000) comprenant une chambre principale (206) et une pluralité de passages internes (208, 10006) ;
la formation d'une deuxième section (240, 1004) de la buse de pulvérisation de carburant (200, 1000) par fabrication par couche additive sur la première section (230, 1002), la deuxième section (240, 1004) comprenant au moins une caractéristique de mesure (242, 1008) disposée en communication fluidique avec au moins un passage interne de la pluralité de passages internes (208, 1006) de la première section (230, 1002) ;
la modification d'au moins une caractéristique de mesure (242, 1008) de la deuxième section (240, 1004) par un premier processus de fabrication soustractif afin d'obtenir un diamètre souhaité (D2) de l'au moins une caractéristique de mesure (242, 1008) et/ou une rugosité de surface souhaitée de l'au moins une caractéristique de mesure (242, 1008) ; et
la formation d'une troisième section (250) de la buse de pulvérisation de carburant (200, 1000) par fabrication par couche additive sur la deuxième section (240, 1004) afin de former la buse de pulvérisation de carburant (200, 1000), la troisième section (250) comprenant un déflecteur (220) et une chambre de rotation (222).

2. Procédé selon la revendication 1, comprenant en outre, avant de former la deuxième section (240) de la buse de pulvérisation de carburant (200), la modification de la pluralité de passages internes (208) de la première section (240) par un deuxième processus de fabrication soustractive afin d'obtenir un diamètre souhaité (D1) de chacun de la pluralité de passages internes (208) et/ou une rugosité de surface souhaitée de chacun de la pluralité de passages internes (208).

3. Procédé selon la revendication 2, ledit deuxième processus de fabrication soustractive comprenant au moins un processus parmi un processus d'usinage par écoulement abrasif, un processus de finition abrasive par hydro-cavitation et un processus d'attaque chimique.

4. Procédé selon l'une quelconque des revendications précédentes, comprenant en outre, avant de former la deuxième section (240) de la buse de pulvérisation de carburant (200), la modification d'une première surface (232) de la première section (230) par un troisième processus de fabrication soustractive, ladite deuxième section (240) étant formée sur la première surface (232) de la première section (230).

5. Procédé selon la revendication 4, ledit troisième processus de fabrication soustractive comprenant au moins un processus parmi un processus de fraisage, un processus de meulage et un processus d'ébavurage.

6. Procédé selon l'une quelconque des revendications précédentes, comprenant en outre, avant de former la troisième section (250) de la buse de pulvérisation de carburant (200), la modification d'une seconde surface (244) de la deuxième section (240) par un quatrième processus de fabrication soustractive, ladite troisième section étant formée sur la seconde surface de la deuxième section (240).

7. Procédé selon la revendication 6, ledit quatrième processus de fabrication soustractive comprenant au moins un processus parmi un processus de fraisage, un processus de meulage et un processus d'ébavurage.

8. Procédé selon l'une quelconque des revendications précédentes, ledit premier processus de fabrication soustractive comprenant au moins un processus parmi un processus de perçage, un processus de meulage hydro-érosif, un processus d'usinage par décharge électrique et un processus de finition abrasive par hydro-cavitation.
